# EUROPEAN PATENT SPECIFICATION

(11) **EP 3 805 031 B1**
(45) Date of publication and mention of the grant of the patent: **26.04.2023**
(21) Application number: 19201763.0
(22) Date of filing: 07.10.2019
(51) Int. Cl.: B60K 11/08

(54) **TRIM COMPONENT OF A VEHICLE AND VEHICLE COMPRISING SUCH A TRIM COMPONENT**
VERKLEIDUNGSKOMPONENTE EINES FAHRZEUGS UND FAHRZEUG MIT SOLCH EINER VERKLEIDUNGSKOMPONENTE
COMPOSANT DE GARNITURE D'UN VÉHICULE ET VÉHICULE COMPORTANT UN TEL COMPOSANT DE GARNITURE

(43) Date of publication of application: 14.04.2021
(73) Proprietor: Motherson Innovations Company Limited, London EC2N 2AX (GB)
(72) Inventor: Burkhardt, Thomas, 81675 München (DE)
(74) Representative: Westphal, Mussgnug & Partner Patentanwälte mbB

(56) References cited:
- DE-A1-102014 113 067
- DE-U1-202016 103 512
- FR-A1- 2 559 432
- GB-A- 2 524 887
- US-A1- 2011 203 861

## Description

The present disclosure relates to a trim component of a vehicle, the vehicle comprising an engine compartment arranged on a front end of the vehicle. Moreover, the present disclosure is directed to a vehicle comprising such a trim component.

The main function of a front grill is to guide air to a radiator by which certain components and fluids used in operation of the vehicle can be cooled. As the front grill is arranged on the front end of the vehicle the front grill has become an important design element for differentiating the vehicles of one manufacturer from those of another one. Modern vehicles often not only comprise one front grill but one main front grill and a number of sub front grills, usually arranged sideward of the main front grill. The air entering the sub front grills may be used for purposes different from the air entering the main front grill.

Depending on the driving situation, in particular the velocity of the vehicle, and the climatic condition, mainly the outside temperature, the flow rate of air penetrating the front grill may vary. In case only a low flow rate is needed the front grill may at least partially be closed. By closing the front grill the aerodynamic resistance of the vehicle may be reduced thereby lowering the fuel consumption of the vehicle. For this purpose it is known to equip the vehicle with a shutter device that comprises at least one shutter element that is movable between a first position in which the front grill is open and a second position in which the front grill is closed. Intermediate positions in which the front grill is partially closed are also possible. Such shutter devices are e.g. known from DE 10 2015 012 965 A1, EP 2 903 844 A1, EP 2 855 185 A1, DE 10 2017 010 105 A1, EP 0 179 304 A1, DE 20 2016 103 512 U1, GB 2 524 884 A1, DE 34 05 107 A1, US 2014/0196965 A1, DE 10 2014 113 067 A1 and KR 10 1805 715 B1. The document US 2011/203861 A1 discloses a trim component of a vehicle according to the preamble of claim 1.

A common drawback of the shutter devices disclosed in these documents is that they are arranged at a fairly long distance from the front grill and rather close to the radiator. The distance is usually 150 mm or larger. Although they reduce the aerodynamic resistance when partially or completely closed turbulences are created in the clearance between the front grill and the shutter device.

It is one task of one embodiment of the present disclosure to propose a trim component comprising at least one front grill that can be closed such that the aerodynamic resistance is reduced to a higher degree compared to shutter devices known in the prior art. Moreover, an embodiment of the present disclosure has the object to propose a vehicle that can be equipped with such a trim component.

The task is solved by the features specified in claims 1 and 5. Advantageous embodiments are the subject of the dependent claims.

According to an embodiment of the present disclosure the trim component comprises
- at least one front grill partially delimiting the engine compartment when mounted on the vehicle and having a curvature,
- at least one bumper arranged adjacent to the front grill or in the vicinity of the front grill, the bumper partially delimiting the engine compartment when mounted on the vehicle, and
- a shutter device comprising a shutter element, the shutter element being movable by means of a moving unit between a first position in which the front grill is open and a second position in which the front grill is closed,
- the shutter device being fastened to the grill and/or the bumper.

The trim component comprises the front grill and at least one bumper. In modern vehicles the front grill and the bumper form an integral part such that the front grill is connected to the trim component e.g. by gluing, welding or by a form closure.

The shutter device is fastened to the front grill and/or the bumper. In the documents cited above the shutter device is fastened to other structures of the vehicle, e.g., the chassis. As mentioned, the distance between the front grill and the shutter device in the prior art is at least 150 mm.

Due to the fact that the shutter device according to the present disclosure is fastened to the front grill or the bumper the shutter device may be arranged closer to the front grill. The shutter elements of the shutter device may be placed as close as 1 to 5 mm from the front grill. When the front grill is closed the reductions of the aerodynamic resistance are significantly higher compared to the shutter devices known from the prior art. Thus the fuel consumption of a vehicle that is equipped with such a shutter device can appreciably be reduced.

It is noted that the term "the front grill is closed" is to be understood in a way that the air flow to the radiator is interrupted. It will become evident from the description and the drawings that even in case the front grill is "closed" air may penetrate through the front grill as such but not or negligibly through the shutter element.

In a further embodiment the shutter device comprises at least one guidance element cooperating with the shutter element, the guidance element being fastened to the front grill and/or the bumper or the guidance element being an integral part of the front grill and/or the bumper. In modern vehicles the front grills are often strongly curved. According to this embodiment the shutter elements can be guided by the guidance elements such that they follow the curvature of the front grill. It is thus possible to position the shutter elements in close proximity to the front grill over the entire front grill irrespective of its curvature. The guidance element may be a separate part that is fastened to the front grill and/or the bumper by appropriate means, e.g., by gluing or welding. Alternatively the guidance element may be an integrated part of the bumper and/or the front grill. In this alternative the fastening process may be omitted, thereby accelerating the manufacturing process.

In another embodiment the guidance element comprises at least one abutment element defining the first position or the second position. The guidance element can thus be used not only for guiding the shutter elements but also for defining their first position and/or the second position. A misalignment and jamming of the shutter element can be avoided. The constructional additional expense is low.

According to the invention
- the front grill comprises a number of fins, and
- the shutter element comprises at least one rigid and curved shutter segment, each shutter segment following the curvature of the front grill and comprising a number of openings the shape of which at least approximately corresponds to the shape of the fins,
- wherein in the first position the fins and openings are arranged offset from each other and in the second position the fins and openings are aligned with each other.

In this case the way the shutter element has to be moved only to a minor degree, namely such that the fins and the openings are aligned each other or the openings are offset from the fins. In the second position in which the openings are aligned with the fins the fins cover the openings such that no or almost no air can penetrate through the openings. It is noted that the proper function of this embodiment is only enabled due to the fact that the shutter element can be located close to the front grill. This embodiment is suited in case of tight installation conditions.

According to the invention the shutter segment is curved. In this case the shutter segment follows the curvature of the front grill so that it can be arranged very closely to the front grill. As a consequence the aerodynamic resistance can be largely reduced when the shutter segment is in the second position.

According to another embodiment the shutter segment is formed as a ball segment, an ellipsoid segment or a cylinder segment. In this embodiment the shutter segment can be moved between the first position and the second position along a circular path which facilitates the design of the moving unit and of the guidance elements. At the same time the curvature of the shutter segment can be largely approximated to the shape of the front grill.

Another implementation of the invention is directed to a vehicle comprising a trim component according to one of the preceding embodiments. The advantages and technical effects described with reference to the trim component equally apply to the vehicle. In short the shutter device can be placed closer to the front grill compared to the shutter devices known in the prior art. As a consequence the aerodynamic resistance of a given vehicle can be further reduced, concomitantly reducing the fuel consumption of the vehicle compared to trim components available in the prior art.

The present invention is described in detail with reference to the drawings attached wherein
- Figure 1A: is a side view of a vehicle comprising a trim component according to a first embodiment not belonging to the present invention having a shutter device that is in a first position,
- Figure 1B: shows the vehicle of Figure 1A in which the shutter device is in a second position,
- Figure 2A: is a side view of a vehicle comprising a trim component according to a second embodiment not belonging to the present invention in which shutter device is in a first position,
- Figure 2B: shows the vehicle of Figure 2A in which the shutter device is in a second position,
- Figure 3A: is a top view of a vehicle comprising a trim component according to a third embodiment not belonging to the present invention in which the shutter device in a second positon,
- Figure 3B: shows the vehicle of Figure 3A in which the shutter device is in an intermediate position,
- Figure 4: is a top view of a vehicle comprising a trim component according to a fourth embodiment not belonging to the present invention in which the shutter device in a second positon,
- Figure 5: is a perspective view of a fifth embodiment of the shutter device in the second position,
- Figure 6A: is a side view of a vehicle comprising a trim component according to a sixth embodiment according to the present inventionin which shutter device is in a first position,
- Figure 6B: shows the vehicle of Figure 6A in which the shutter device is in a second position,
- Figure 6C: shows the vehicle of Figure 6A by means of a top view,
- Figure 7: is a perspective view of a separate shutter segment of the shutter device shown in Figures 6A to 6C, and
- Figure 8: is a front view of a trim component according to the present disclosure.

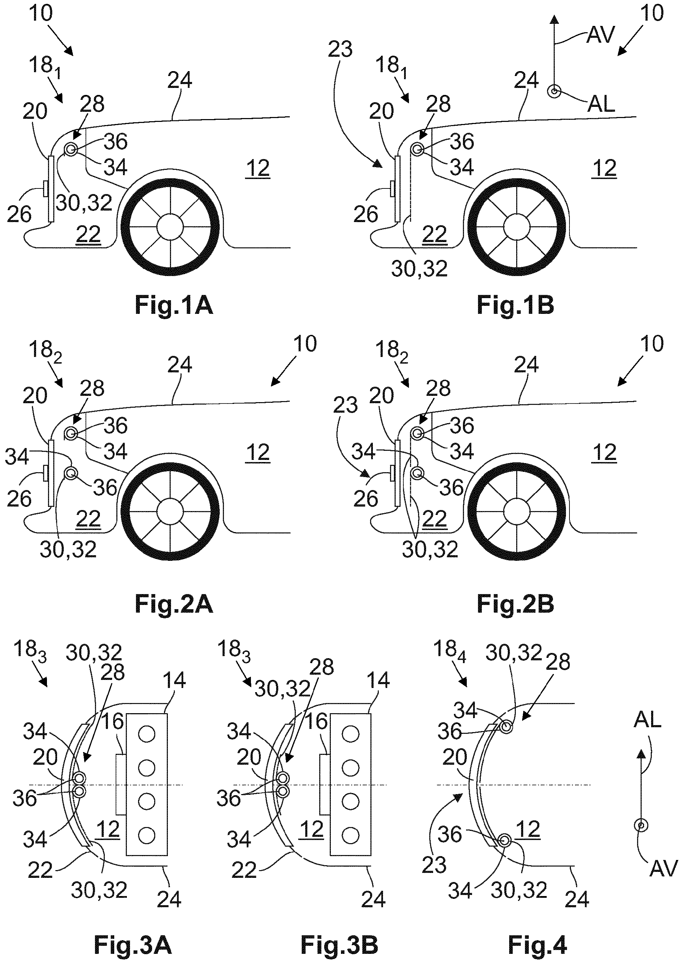

Figures 1A and 1B are a principle side view of a vehicle 10 that comprises an engine compartment 12 in which an engine 14, e.g., a combustion engine, may be arranged. Moreover, a radiator 16 may be arranged in the engine compartment 12 (see Figure 3A). The radiator 16 may be used to cool components or fluids used in operation of the vehicle 10.

The vehicle 10 further comprises a trim component 18₁ according to a first embodiment not belonging to the present invention having a front grill 20 and a bumper 22, both arranged on a front end 23 of the vehicle 10 and fastened to the vehicle 10 such that the bumper 22 is in alignment with the outer surface of the car body 24. The engine compartment 12 is delimited by the trim component 18₁ and the car body 24. A number plate 26 may be fastened on the front grill 20. The front grill 20 is permeable to air so that air can be guided to the radiator 16 were it is used for cooling purposes.

Moreover, the vehicle 10 comprises a shutter device 28 fastened to the trim component 18₁. The shutter device 28 comprises a shutter element 30 being formed by a plurality of rigid and planar shutter segments 32 that can be moved between a first position that is shown in Figure 1A and a second position that is shown in Figure 1B. The plurality of shutter segments 32 are indicated by the dashed lines. In the first position the entire front grill 20 is open such that air hitting the front grill 20 can permeate therethrough and reach the radiator 16. In the second position the entire front grill 20 is closed to that air hitting the front grill 20 may permeate therethrough, however, not through the shutter segments 32. Thus the flow of air through the front grill 20 and to the radiator 16 is interrupted. The shutter segments 32 may also be arranged in intermediate positions in which the shutter segments 32 only partially interrupt the air flow to the radiator 16.

In the first embodiment the plurality of shutter segments 32 are rotatably connected to each other and can rotate relative to each other around an axis running parallel to the lateral axis AL of the vehicle 10. Moreover, the shutter device 28 is equipped with a roller unit 34 that is rotatable around an axis running parallel to the lateral axis AL of the vehicle 10. The roller unit 34 is provided on the upper end of the front grill 20.

A moving unit 36 is integrated into the roller unit 34. By rotating the roller unit 34 by means of the moving unit 36 the shutter segments 32 can be wound on the roller unit 34 and unwound therefrom. When completely wound on the roller unit 34 the shutter element 30 is in the first position and when completely unwound the shutter element 30 is in the second position.

In Figures 2A and 2B a second embodiment of the trim component 18₂ not belonging to the present invention is shown in a way analogous to Figures 1A and 1B. The main difference is that the shutter device 28 comprises two roller units 34. The first roller unit 34 is arranged on the upper end of the front grill 20 whereas the second roller unit 34 is arranged approximately in the center of the front grill 20. The remaining constitution of the roller units 34 is the same as described for Figures 1A and 1B. In Figure 2A the shutter segments 32 are in the first position whereas in Figure 2B the shutter segments 32 are in the second position. The first roller unit 34 and the second roller unit 34 may be activated independent of each other so that only the upper half or only the lower half of the front grill 20 may be closed. A specific air flow can be generated that may be advantageous for one or another purpose.

Due to the fact that the shutter segments 32 and the roller units 34 are movable around axes parallel to the lateral axis AL of the vehicle 10 the shutter segments 32 are lowered and lifted when moved between the first position and the second position.

As the shutter device 28 is fastened to the trim component 18₁, 18₂, i.e., to the bumper 22 and/or to the front grill 20 the shutter segments 32 can be located in close proximity to the front grill 20, thereby minimizing the empty space between the front grill 20 and the shutter segments 32. The empty space is significantly reduced compared to shutter devices known from the prior art. The creation of turbulences increasing the aerodynamic resistance of the vehicle 10 is also reduced compared to shutter devices known from the prior art.

Figures 3A and 3B are a principle top view of a vehicle 10 that is equipped with a trim component 18₃ according to a third embodiment not belonging to the present invention. As mentioned the radiator 16 and the engine of the vehicle 10 are included in Figures 3A and 3B. In the third embodiment of the trim component 18₃ the first roller unit 34 and the second roller unit 34 are located in the proximity of the center of the vehicle 10. The roller units 34 and the shutter segments 32 are rotatable around an axis parallel to a vertical axis AV. As a consequence the shutter segments 32 are moved from the side ends of the front grill 20 to and from the center when moved between the first position and the second position.

The front grill 20 of the trim component 18₃ of the third embodiment is noticeably curved around the vertical axis AV of the vehicle 10. It is assumed that the front grill 20 of the trim component 18₁, 18₂ of the first and second embodiment is not or only negligibly curved around the vertical axis AV. In case of the front grill 20 of the trim component 18₃ of the third embodiment the distance between the shutter segments 32 and the front grill 20 would increase to the center of the vehicle 10 when the shutter device 28 was arranged in the same way as described for the first and the second embodiment. Due to the fact that the roller unit 34 and the shutter segments 32 are rotatable around axes parallel to the vertical axis AV of the vehicle 10 the shutter segments 32 can follow the curvature of the front grill 20. Thus the difference between the front grill 20 and the shutter segments 32 can be kept constant or almost constant throughout the entire front grill 20. The empty space between the front grill 20 and the shutter segments 32 is kept small so that the creation of turbulences can be kept at a low level. It is noted that in Figure 3B the shutter segments 32 are placed in an intermediate position.

Figure 4 shows a fourth embodiment of the trim component 18₄ not belonging to the present invention in which the shutter element 30 is in the second position. The main difference between the third embodiment of the trim component 18₃ and the fourth embodiment of the trim component 18₄ is that the first roller unit 34 and the second roller unit 34 are arranged on the side ends of the front grill 20 and not in the center. In the fourth embodiment the influence of the roller units 34 on the air flow to the radiator 16 are smaller compared to the third embodiment of the trim component 18₃.

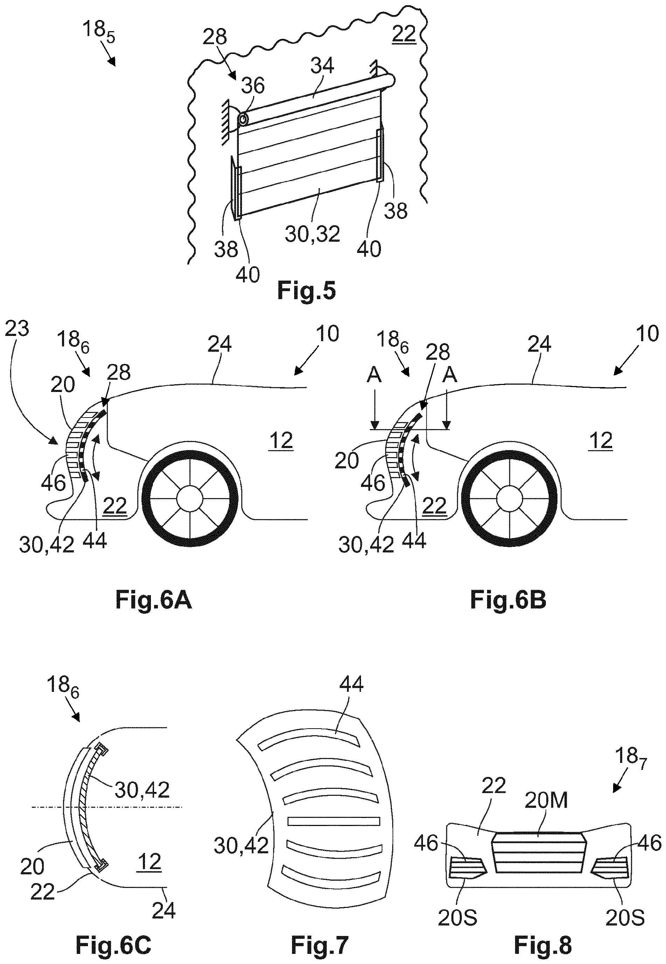

In Figure 5 a fifth embodiment of the trim component 18₅ not belonging to the present invention is shown by means of a principle perspective view. The shutter element 30 is located in the second positon such that the air flow between the front grill 20 (in Figure 5 covered by the shutter element 30 and thus not visible) and the radiator 16 (not shown) is interrupted. It is evident from Figure 5 that the trim component 18₅ is provided with two guidance elements 38 that encompass the shutter segments 32 on their side ends. The two guidance elements 38 may be a separate part that are fastened to the bumper 22 and/or the front grill 20. Alternatively, the guidance elements 38 may be an integral part of the bumper 22 and/or the front grill 20. Moreover, each of the guidance element 38 comprises one abutment element 40 defining a second position of the shutter element 30. The guidance elements 38 interact with the shutter element 30 in a way that it is moved along a well-defined path between the first position and the second position.

In Figures 6A to 6C a sixth embodiment of the trim component 18₆ according to the present inventionis shown. Figures 6A and 6B are a principle side view whereas Figure 6C is a principle top view of the vehicle 10. In contrast to the other embodiments the shutter element 30 consists of one single rigid and curved shutter segment 42. The shutter segment 42 is separately shown in Figure 7 by means of an exaggerated perspective view. The shutter segment 42 comprises in total six slot-like openings 44. Moreover the shutter segment 42 is curved wherein the curvature is approximated to the curvature of the front grill 20 of the trim component 18₆ of the sixth embodiment.

When comparing Figures 6A and 6B with Figure 6C one can see that the shutter segment 42 is curved in two planes. Both curvatures follow a circular path so that the shutter segment 42 is formed as a ball segment. Alternatively the shutter segment 42 may be formed as a cylinder segment or an ellipsoid segment. Thereby it is possible to move the shutter segment 42 along a circular path between the first position (Figure 6A) and the second position (Figure 6B). The design of the moving unit 36 (not shown) may be facilitated. As an example the moving unit 36 may comprise a gear wheel meshing with a toothed rack arranged on the shutter segment 42. A drive train may be provided between the motor and the gear wheel of the moving unit 36. The motor may be arranged at distance from the shutter segment 42.

Reference is now made to Figures 6A and 6B. It is apparent that the front grill 20 of the trim component 18₆ of the sixth embodiment comprises a number of fins 46. The shape and the size of the slot-like openings 44 approximately correspond to those of the fins 46. In the first position (Figure 6A) the slot-like openings 44 of the shutter segment 42 and the fins 46 of the front grill 20 are arranged offset from each other so that air can penetrate through the openings 44 and flow to the radiator 16. In the second position (Figure 6B) the opening and the fins 46 are aligned with each other. The air cannot penetrate the openings 44 anymore so that the air flow to the radiator 16 is interrupted.

Figure 8 shows a principle front view of a trim component 18₇ according to a seventh embodiment. The trim component 18₇ comprises one main front grill 20M and two sub front grills 20S. All the front grills 20M, 20S are provided with fins 46. While the air flow through the main front grill 20M may be controlled by a shutter device 28 as shown in Figure 5 the air flow through the two sub front grills 20S may be controlled by a shutter device 28 as shown in Figures 6A to 6C. Other configurations are also conceivable.

### Reference list

- 10: vehicle
- 12: engine compartment
- 14: engine
- 16: radiator
- 18: trim component
- 18₁ - 18₇: trim component
- 20: front grill
- 20M: main front grill
- 20S: sub front grill
- 22: bumper
- 23: front end
- 24: car body
- 26: number plate
- 28: shutter device
- 30: shutter element
- 32: planar shutter segment
- 34: roller unit
- 36: moving unit
- 38: guidance element
- 40: abutment element
- 42: curved shutter segment
- 44: opening
- 46: fin
- AL: lateral axis
- AV: vertical axis

## Claims

1. Trim component (18) of a vehicle (10), the vehicle (10) comprising an engine compartment (12) arranged on a front end (23) of the vehicle (10), the trim component (18) comprising
- at least one front grill (20) partially delimiting the engine compartment (12) when mounted on the vehicle (10) and having a curvature,
- at least one bumper (22) arranged adjacent to the front grill (20) or in the vicinity of the front grill (20), the bumper (22) partially delimiting the engine compartment (12) when mounted on the vehicle (10), and
- a shutter device (28) comprising a shutter element (30), the shutter element (30) being movable by means of a moving unit (36) between a first position in which the front grill (20) is open and a second position in which the front grill (20) is closed,
- the shutter device (28) being fastened to the front grill (20) and/or the bumper (22)
- the front grill (20) comprises a number of fins (46), **characterized in that**
- the shutter element (30) comprises a rigid and curved shutter segment (42) following the curvature of the front grill and comprising a number of openings (44) the shape of which at least approximately corresponds to the shape of the fins (46),
- wherein in the first position the fins (46) and openings (44) are arranged offset from each other so that air can penetrate through the openings (44), and in the second position the fins (46) and openings (44) are aligned with each other so that the air cannot penetrate the openings (44).

2. Trim component (18) according to claim 1, **characterized in that** the shutter device (28) comprises at least one guidance element (38) cooperating with the shutter element (30), the guidance element (38) being
- fastened to the front grill (20) and/or the bumper (22) or
- an integral part of the front grill (20) and/or the bumper (22).

3. Trim component (18) according to claim 2, **characterized in that** the guidance element (38) comprises at least one abutment element (40) defining the first position or the second position.

4. Trim component (18) according to claim 3, **characterized in that** the shutter segment (42) is formed as a ball segment, an ellipsoid segment or a cylinder segment.

5. Vehicle (10), comprising
- an engine compartment (12) arranged on a front end of the vehicle (10) and
- a trim component (18) according to one of the preceding claims.

## Patentansprüche

1. Verkleidungskomponente (18) eines Fahrzeugs (10), wobei das Fahrzeug (10) einen Motorraum (12) aufweist, der an einem vorderen Ende (23) des Fahrzeugs (10) angeordnet ist, wobei die Verkleidungskomponente (18) aufweist
- zumindest einen Frontgrill (20), der, wenn er an dem Fahrzeug (10) montiert ist, den Motorraum (12) teilweise begrenzt und der eine Krümmung aufweist,
- zumindest einen Stoßfänger (22), der benachbart zu dem Frontgrill (20) oder in der Nähe des Frontgrills (20) angeordnet ist, wobei der Stoßfänger (22), wenn er an dem Fahrzeug (10) montiert ist, den Motorraum (12) teilweise begrenzt, und
- einer Verschlussvorrichtung (28), die ein Verschlusselement (30) aufweist, wobei das Verschlusselement (30) mittels einer beweglichen Einheit (36) zwischen einer ersten Position, in der der Frontgrill (20) geöffnet ist, und einer zweiten Position, in der der Frontgrill (20) geschlossen ist, beweglich ist,
- die Verschlussvorrichtung (28) an dem Frontgrill (20) und/oder dem Stoßfänger (22) befestigt ist
- der Frontgrill (20) eine Anzahl von Rippen (46) aufweist, **dadurch gekennzeichnet, dass**
- das Verschlusselement (30) ein starres und gekrümmtes Verschlusssegment (42) aufweist, das der Krümmung des Frontgrills folgt und eine Anzahl von Öffnungen (44) aufweist, deren Form zumindest annähernd der Form der Rippen (46) entspricht,
- wobei die Rippen (46) und Öffnungen (44) in der ersten Position zueinander versetzt angeordnet sind, so dass Luft die Öffnungen (44) durchdringen kann, und die Rippen (46) und Öffnungen (44) in der zweiten Position so zueinander ausgerichtet sind, dass die Luft nicht die Öffnungen (44) nicht durchdringen kann.

2. Verkleidungskomponente (18) nach Anspruch 1,
**dadurch gekennzeichnet, dass** die Verschlussvorrichtung (28) zumindest ein Führungselement (38) aufweist, das mit dem Verschlusselement (30) zusammenwirkt, wobei das Führungselement (38)
- an dem Frontgrill (20) und/oder dem Stoßfänger (22) befestigt ist oder
- ein integraler Teil des Frontgrills (20) und/oder des Stoßfängers (22) ist.

3. Verkleidungskomponente (18) nach Anspruch 2,
**dadurch gekennzeichnet, dass** das Führungselement (38) zumindest ein Anschlagelement (40) aufweist, das die erste Position oder die zweite Position definiert.

4. Verkleidungskomponente (18) nach Anspruch 3,
**dadurch gekennzeichnet, dass** das Verschlusssegment (42) als Kugelsegment, Ellipsoidsegment oder Zylindersegment ausgebildet ist.

5. Fahrzeug (10), das aufweist:
- einen Motorraum (12), der an einem vorderen Ende des Fahrzeugs (10) angeordnet ist, und
- eine Verkleidungskomponente (18) nach einem der vorhergehenden Ansprüche.

## Revendications

1. Elément d'habillage (18) d'un véhicule (10),
le véhicule (10) ayant un compartiment moteur (12) à son extrémité avant (23),
l'élément d'habillage (18) comprenant :
- au moins une grille frontale (20) délimitant partiellement le compartiment moteur (12) lorsqu'elle est installée sur le véhicule (10), et ayant une courbure,
- au moins un parechoc (22) adjacent à la grille frontale (20) ou au voisinage de la grille frontale (20), le parechoc (22) délimitant partiellement le compartiment moteur (12) lorsqu'il est installé sur le véhicule (10), et
- un dispositif obturateur (28) comprenant un élément obturateur (30), cet élément obturateur (30) étant mobile par un moyen d'entrainement (36) entre une première position dans laquelle la grille frontale (20) est ouverte et une seconde position dans laquelle la grille frontale (20) est fermée,
- le dispositif obturateur (28) étant fixé à la grille frontale (20) et/ou au parechoc (22),
- la grille frontale (20) comprenant un certain nombre de lamelles (46), **caractérisé en ce que**
l'élément d'obturation (30) comprend un segment d'obturateur rigide et courbé (42) suivant la courbure de la grille frontale et comprenant un ensemble d'ouverture (44) dont la forme correspond approximativement à la forme des lamelles (46),
- dans la première position des lamelles (46) et les ouvertures (44) sont décalées les unes des autres de façon que l'air puisse pénétrer à travers les ouvertures (44), et
- dans la seconde position, les lamelles (46) et les ouvertures (44) sont alignées les unes sur les autres de façon que l'air ne peut pas pénétrer par les ouvertures (44).

2. Elément d'habillage (18) selon la revendication 1,
**caractérisé en ce que**
le dispositif obturateur (28) comprend au moins un élément de guidage coopérant avec l'élément d'obturateur (30), l'élément de guidage (38) :
- est fixé à la grille frontale (20) et/ou au parechoc (22), ou
- est partie intégrale de la grille frontale (20) et/ou du parechoc (22).

3. Elément d'habillage (18) selon la revendication 2,
**caractérisé en ce que**
l'élément de guidage (38) comprend au moins un élément de butée (40) définissant la première position ou la seconde position.

4. Elément d'habillage (18) selon la revendication 3,
**caractérisé en ce que**
le segment d'obturateur (42) est formé d'un segment sphérique, d'un segment ellipsoïdal ou d'un segment cylindrique.

5. Véhicule (10) comprenant :
- un compartiment moteur (12) à l'avant du véhicule (10), et
- un élément d'habillage (18) selon l'une des revendications précédentes.
